# EUROPÄISCHE PATENTSCHRIFT

(11) **EP 0 347 659 B1**
(45) Veröffentlichungstag und Bekanntmachung des Hinweises auf die Patenterteilung: **17.11.1994**
(21) Anmeldenummer: 89110419.2
(22) Anmeldetag: 08.06.1989
(51) Int. Cl.: G06F 11/00

(54) **Anordnung zur Überwachung einer elektronischen Datenverarbeitungsanlage**
Monitoring arrangement for an electronic data processing facility
Agencement de surveillance pour une installation de traitement de données électronique

(30) Priorität: 23.06.1988 DE 3821228
(43) Veröffentlichungstag der Anmeldung: 27.12.1989
(73) Patentinhaber: SIEMENS AKTIENGESELLSCHAFT, 80333 München (DE)
(72) Erfinder: Schwartz, Rolf, D-6747 Annweiler (DE)

(56) Entgegenhaltungen:
- US-A- 3 479 650
- PATENT ABSTRACTS OF JAPAN, Band 8, Nr. 228 (P-308)[1665], 22. Juni 1984;& JP-A-59 108 163 (NIPPON DENSHIN DENWA KOSHA) 11-12-1982

## Beschreibung

### Anordnung zur Überwachung einer elektronischen Datenverarbeitungsanlage

### Technisches Gebiet

Die Erfindung betrifft eine Anordnung zur Überwachung einer elektronischen Datenverarbeitungsanlage, die bei Auftreten eines fehlerhaften Signals am Signaleingang der elektronischen Datenverarbeitungsanlage das Signal sperrt.

### Stand der Technik

Es ist bekannt, mit entsprechenden Kontrollprogrammen in Datenverarbeitungsanlagen fehlerhafte Eingangssignale, die den eigentlichen Programmablauf stören, dadurch zu erkennen, daß das Kontrollprogramm die Reaktion der Datenverarbeitungsanlage kontrolliert und bei einem festgestellten Fehler die Zielbausteine, auf die das Signal wirkt, sperrt.

### Darstellung der Erfindung

Der Erfindung liegt die Aufgabe zugrunde, eine Anordnung zu schaffen, die mit schaltungstechnischen Mitteln eine Kontrolle und Unwirksammachung von fehlerhaften Signalen ermöglicht.

Zur Lösung dieser Aufgabe weist die Erfindung die in Anspruch 1 angegebenen Merkmale auf. Eine Anordnung gemäß dem Oberbegriff des Anspruchs 1 ist aus der Patentschnift JP-A- 59 108 163 bekannt gegeben. Vorteilhafte Ausgestaltungen der Erfindung sind in den Unteransprüchen angegeben.

Die erfindungsgemäße Lösung ist vor allem in vorteilhafter Weise bei redundanten, fehlersicheren Automatisierungssystemen anwendbar. Bei solchen Systemen ist es erforderlich, daß Signale, die von außen zeitlich willkürlich ins System gebracht werden, z. B. Prozeßinterrupts, im Fehlerfall gesperrt werden müssen, um so das System zu schützen und keine falschen oder unnötigen Reaktionen oder gar Programmblockierungen hervorzurufen.

Gemäß der Erfindung ist eine Schaltung als Abschaltlogik realisiert, die, im Verbund mit dem eventuell redundanten Aufbau der Datenverarbeitungsanlage, das Sperren der fehlerhaften Signale garantiert. Diese Garantie kann man dadurch erreichen, daß man das Sperrenkönnen durch diese Abschaltlogik testbar macht, wobei der Test die Signale im fehlerfreien Fall auch nicht nur kurzzeitig unterbrechen darf. Die Abschaltlogik ist dabei gegebenenfalls in jeder Redundanz vorhanden. Einen verdeckten Fehler, der beim Test erkannt wird, müssen hierbei auch die jeweils anderen Redundanzen erkennen und anzeigen.

### Erläuterung der Figuren

- Figur 1: zeigt den prinzipiellen Aufbau eines Automatisierungssystems mit Abschaltlogik,
- Figur 2: ein Detailschaltbild der Abschaltlogik und
- Figur 3: eine Wertetabelle mit Zeitdiagrammen der Signale in der Abschaltlogik.

### Bester Weg zur Ausführung der Erfindung

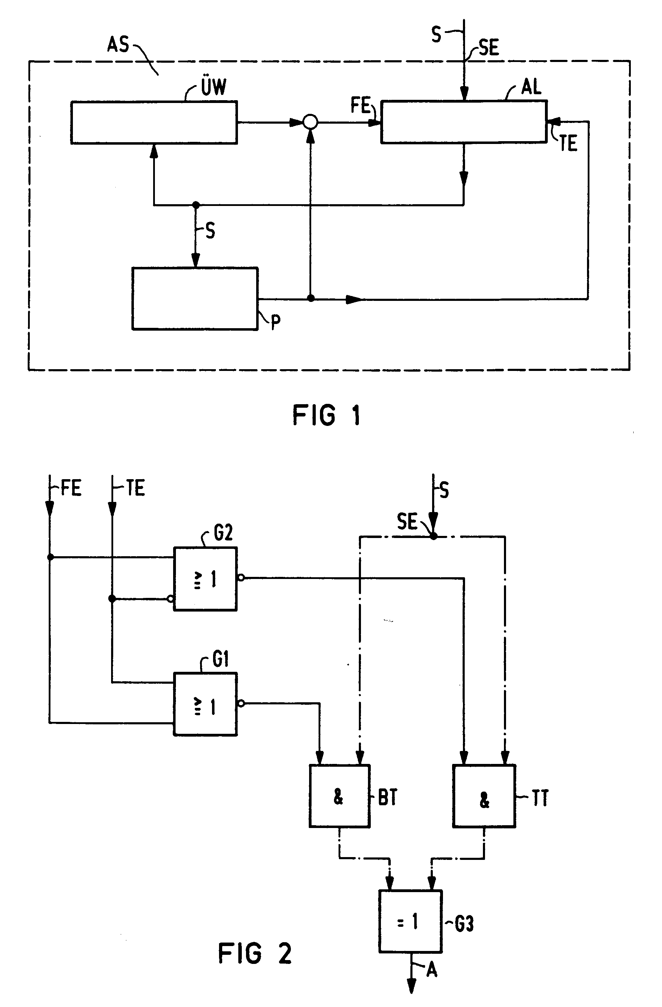

In der Figur 1 ist die Einbeziehung einer Abschaltlogik AL in die elektronische Datenverarbeitungsanlage eines Automatisierungssystems AS ersichtlich, an deren Signaleingang SE ein oder mehrere Signale S anliegen. Die Signale S wirken steuernd auf einen Prozessor P oder andere entsprechende Funktionseinheiten des redundanten, fehlersicheren Automatisierungssystems AS, von dem hier nur einer der redundant ausgeführten Teile dargestellt ist. Das Signal S kann, wenn es fehlerhaft ist, z. B. zu schnelles Pulsen oder sogenanntes Einfrieren des Signalpegels, den Programmablauf im Prozessor P erheblich stören. Wird das Signal S jedoch in einer Überwachungsschaltung ÜW überwacht und bei einem erkannten Fehler gesperrt, bleibt insbesondere die fehlersichere Funktion des Automatisierungssystems AS voll erhalten. Die Abschaltlogik AL wird von zwei Eingängen gesteuert. Der Fehlereingang FE aktiviert das Sperren der Signale durch die Abschaltlogik AL. Der Testeingang TE bringt die Abschaltlogik AL in den Testmodus. Wird nur der Fehlereingang FE angesteuert, wird das Signal S gesperrt. Wird der Testeingang TE angesteuert, wird ein Fehler zusätzlich simuliert, das Signal S jedoch nicht gesperrt.

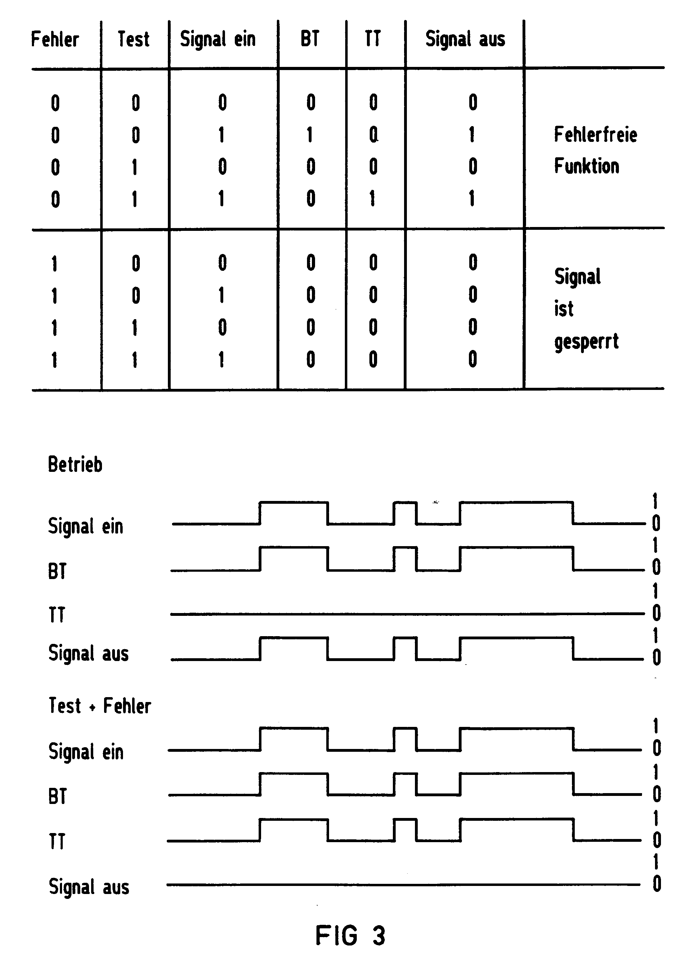

Die detaillierte Funktion der Abschaltlogik AL soll anhand der Figuren 2 und 3 erläutert werden.

Der Testeingang TE und der Fehlereingang FE sind auf die Eingänge von zwei NOR-Gattern G1 und G2 geführt, deren Ausgänge jeweils mit einem Eingang eines Betriebstores BT und eines Testtores TT verbunden sind. Das Signal S kann ebenfalls durch die zwei Tore BT, TT an den Ausgang durchgeschaltet werden, die als AND-Gatter ausgeführt sind. Im fehlerfreien Fall (Fehlersignal = 0) wird das Signal S durch das Betriebstor BT und ein Exklusiv-ODER-Gatter G3 an den Ausgang A geschaltet, das Testtor TT dagegen sperrt das Signal. Im Testbetrieb (Testsignal = 1) sperrt das Betriebstor BT das Signal S, und das Testtor TT läßt das Signal S durch, wie es auch aus der Wertetabelle gemäß Figur 3 ersichtlich ist. Im Testmodus wird somit das Signal S nicht gesperrt. Kann eines der beiden Tore BT oder TT nicht mehr sperren, so liegt das Signal S an beiden Eingängen des Exklusiv-ODER-Gatters G3, so daß sich eine statische Null am Ausgang A einstellt. Wenn beide Tore BT, TT durch einen Fehler gesperrt werden, ergibt sich ebenfalls auch eine statische Null am Ausgang A. Da ein Signalwechsel am Signaleingang des Prozessors P eine bestimmte Reaktion hervorruft, führt ein statisch anliegendes Signal S natürlich zu einer Abweichung der Programmbearbeitung des Prozessors P in der Redundanz mit der defekten Abschaltlogik AL. Die Software der elektronischen Datenverarbeitungsanlage erkennt diese Asynchronität jedoch auf einfache Weise (u. U. unterstützt durch einen Hardware-Vergleicher) und veranlaßt eine entsprechende Fehlermeldung.

Die Dauer der Testphase ist so zu bemessen, daß mindestens ein Signalwechsel des Signals S stattfindet, weil dann erst die Sperrfunktion zu testen ist. Die Tests können per Software oder durch einen Hardware-Timer angestoßen werden. Der Signalpegel des Ausgangssignals am Ausgang A im gesperrten Zustand sollte so sein, daß die nachfolgenden Funktionseinheiten keine Reaktion zeigen.

## Patentansprüche

1. Anordnung zur Überwachung einer elektronischen Datenverarbeitungsanlage, die
- bei Auftreten eines fehlerhaften Signals (S) am Signaleingang (SE) der elektronischen Datenverarbeitungsanlage das Signal (S) mittels einer Abschaltlogik (AL) sperrt,
**dadurch gekennzeichnet**, daß am Signaleingang (SE) der
- Abschaltlogik (AL) das zu sperrende Signal (S), an deren Fehlereingang (FE) das Ausgangssignal einer Überwachungsschaltung (ÜW) die das zu sperrende Signal (S) überwacht, und an deren Testeingang (TE) ein Testsignal anliegt das dazu dient, im einem Testmodus, die Sperrfunktion zu testen, wobei
- ein Fehlersignal ("1") am Fehlereingang (FE) zum Sperren des Signals (S) am Signaleingang (SE) führt und
- ein Testsignal ("1") am Testeingang (TE) und ein Fehlersignal ("1") am Fehlereingang (FE) nicht zum Sperren des Signals (S) am Signaleingang (SE) führt.

2. Anordnung nach Anspruch 1, **dadurch gekennzeichnet**, daß
- die Abschaltlogik (AL) folgende Elemente aufweist:
- ein erstes NOR-Gatter (G1), an dessen beiden Eingängen jeweils das Fehler- und das Testsignal anliegen,
- ein zweites NOR-Gatter (G2), an dessen ersten Eingang das Fehlersignal und dessen zweiten Eingang das Testsignal in negierter Form anliegt,
- ein erstes AND-Gatter (BT), an dessen ersten Eingang das negierte Ausgangssignal des ersten NOR-Gatters (G1) und an dessen zweiten Eingang das zu sperrende Signal anliegt,
- ein zweites AND-Gatter (TT), an dessen ersten Eingang der Ausgang des zweiten NOR-Gatters (G2) anliegt und an dessen zweiten Eingang das zu sperrende Signal anliegt, und
- ein Exklusiv-ODER-Gatter (G3), an dessen Eingängen die Ausgänge der beiden AND-Gatter (BT, TT) anliegen.

3. Anordnung nach Anspruch 1 oder Anspruch 2, **dadurch gekennzeichnet**, daß
- bei einer redundanten Anordnung mit zwei elektronischen Datenverarbeitungsanlagen jeweils eine Abschaltlogik (AL) für jede Datenverarbeitungsanlage vorhanden ist.

## Claims

1. An arrangement for monitoring an electronic data processing installation which
- on the occurrence of a faulty signal (S) at the signal input (SE) of the electronic data processing installation blocks the signal (S) by means of a deactivating logic circuit (AL),
characterised in that the signal (S) to be blocked occurs at the signal input (SE) of the deactivating logic circuit (AL), the output signal of a monitoring circuit (ÜW) occurs at the fault input (FE) of said deactivating logic circuit, and a test signal, which in a test mode serves to test the blocking function, occurs at the test input (TE) of said deactivating logic circuit, where
- a fault signal ("1") at the fault input (FE) leads to the blockage of the signal (S) at the signal input (SE) and
- a test signal ("1") at the test input (TE) and a fault signal ("1") at the fault input (FE) does not lead to the blockage of the signal (S) at the signal input (SE).

2. An arrangement as claimed in Claim 1, characterised in that
- the deactivating logic circuit (AL) comprises the following elements:
- a first NOR-gate (G1), at the two inputs of which the fault signal and the test signal respectively occur,
- a second NOR-gate (G2), at the first input of which the fault signal occurs and at the second input of which the test signal occurs in negated form,
- a first AND-gate (BT), at the first input of which the negated output signal of the first NOR-gate (G1) and at the second input of which the signal to be blocked occur,
- a second AND-gate (TT), to the first input of which the output of the second NOR gate (G2) is connected and at the second input of which the signal to be blocked occurs and
- an exclusive-OR-gate (G3), the inputs of which are connected to the outputs of the two AND-gates (BT, TT).

3. An arrangement as claimed in Claim 1 or Claim 2, characterised in that
- in the case of a redundant arrangement comprising two electronic data processing installations a respective deactivating logic circuit (AL) is provided for each data processing installation.

## Revendications

1. Dispositif de contrôle d'une installation électronique de traitement de données, qui
- lorsqu'apparaît un signal (S) erroné à l'entrée (SE) de signal de l'installation électronique de traitement de données, bloque le signal (S) au moyen d'une logique (AL) de coupure,
caractérisé en ce que le signal (S) à bloquer est appliqué à l'entrée (SE) de signal de la logique (AL) de coupure, à l'entrée (FE) d'erreur de laquelle est appliqué le signal de sortie d'un circuit (ÜW) de contrôle, qui contrôle le signal (S) à bloquer, et à l'entrée (TE) de test de laquelle est appliqué un signal de test, qui sert à tester la fonction de blocage pendant un mode test,
- un signal ("1") d'erreur à l'entrée (FE) d'erreur provoquant le blocage du signal (S) à l'entrée (SE) de signal et
- un signal ("1") de test à l'entrée (TE) de test et un signal ("1") d'erreur à l'entrée (FE) d'erreur ne provoquant pas le blocage du signal (S) à l'entrée (SE) de signal.

2. Dispositif suivant la revendication 1, caractérisé en ce que
- la logique (AL) de coupure comporte les éléments suivants :
- une première porte NON-OU (G1), aux deux entrées de laquelle sont appliqués respectivement le signal d'erreur et le signal de test,
- une deuxième porte NON-OU (G2), à la première entrée de laquelle est appliqué le signal d'erreur et à la deuxième entrée de laquelle est appliqué le signal de test sous forme inversée,
- une première porte ET (BT), à la première entrée de laquelle est appliqué le signal de sortie inversé de la première porte NON-OU (G1) et à la deuxième entrée de laquelle est appliqué le signal à bloquer,
- une deuxième porte ET (TT), à la première entrée de laquelle est appliquée la sortie de la deuxième porte NON-OU (G2) et à la deuxième entrée de laquelle est appliqué le signal à bloquer, et
- une porte OU-EXCLUSIF (G3), aux entrées de laquelle sont appliquées les sorties des deux portes ET (BT, TT).

3. Dispositif suivant la revendication 1 ou 2, caractérisé en ce que dans un dispositif redondant comportant deux dispositifs de traitement de données, il est prévu une logique (AL) de coupure pour chaque dispositif de traitement de données.
